# EUROPEAN PATENT APPLICATION

(11) **EP 2 665 026 A1**
(43) Date of publication of application: **20.11.2013**
(21) Application number: 13167764.3
(22) Date of filing: 15.05.2013
(51) Int. Cl.: G06Q 20/40

(54) **Method, apparatus, and system for controlling account management operation**

(30) Priority: 15.05.2012 WO PCT/CN2012/075514
(71) Applicant: Huawei Technologies Co., Ltd., Shenzen, Guangdong 518129 (CN)
(72) Inventor: Zhu, Zhaosheng, Shenzhen (CN); Qi, Guangyu, Shenzhen (CN)
(74) Representative: Kreuz, Georg Maria

(57) **Abstract**

Embodiments of the present invention provide a method, an apparatus, and a system for controlling an account management operation, where the method includes: determining to perform an account management operation on an account of a user at a management terminal; acquiring user location information; acquiring operation location information; and according to the user location information and the operation location information, performing first control on the account management operation. Through the method, the apparatus, and the system for controlling the account management operation according to the embodiments of the present invention, when a management operation is performed on an account, a location of a user of the account is compared with a location of performing the management operation on the account, so that whether a person who performs the management operation on the account is the user holding the account can be determined, thereby preventing financial fraud in advance.

## Description

### FIELD OF THE INVENTION

The present invention relates to the field of information technologies, and in particular, to a method, an apparatus, and a system for controlling an account management operation.

### BACKGROUND OF THE INVENTION

In recent years, with the development of information technologies, financial services also make great progress. Various convenient management terminals (for example, a point of sells (POS, Point Of Sells), an online bank, an automatic teller machine (ATM, Automatic Teller Machine), and a charge agency terminal) greatly enrich a daily transaction activity of a user of a financial service institution, such as a bank, and bring convenience to the daily transaction activity. At the same time, financial fraud of all kinds occasionally occurs and becomes increasingly fierce. Only in a credit card service of the bank, billions of RMB is lost every year due to fraud by stealing the card. The number of credit cards is large, and the fraud by stealing the card is most rampant. According to the statistics of Unionpay, the number of credit cards in China already reaches 2.1 billion. Likewise, the financial fraud also highly occurs in various debit cards, bank accounts and the like, so prevention and analysis of the financial fraud in advance are urgently required.

At present, the banks inform the users holding credit cards, bank cards or bank accounts of transaction information of the credit cards, the bank cards or the bank accounts in a short message manner through a mobile phone short message system or by making a telephone call. However, the manner of the short message or the telephone call is performed after the transaction, which cannot prevent the financial fraud in advance before the transaction.

### SUMMARY OF THE INVENTION

Embodiments of the present invention provide a method, an apparatus and a system for controlling an account management operation, which can prevent financial fraud in advance before a management operation is performed on an account.

In an aspect, a method for controlling an account management operation is provided, where the method includes: determining to perform an account management operation on an account of a user at a management terminal; acquiring user location information, wherein the user location information is used to indicate a location of the user; acquiring operation location information, wherein the operation location information is used to indicate a location of the management terminal; and if the location of the user is consistent with the location of the management terminal, allowing the account management operation; if the location of the user is inconsistent with the location of the management terminal, performing second control on the account management operation.

In another aspect, an apparatus for controlling an account management operation is provided, where the apparatus includes: a determination unit, configured to determine to perform an account management operation on an account of a user at a management terminal; an acquisition unit, configured to acquire user location information, wherein the user location information is used to indicate a location of the user; and acquire operation location information, wherein the operation location information is used to indicate a location of the management terminal; and a control unit, configured to: if the location of the user is consistent with the location of the management terminal, allow the account management operation; if the location of the user is inconsistent with the location of the management terminal, perform second control on the account management operation.

In still another aspect, a system for controlling an account management operation is provided, where the system includes: a control center, configured to: when it is determined that an account management operation needs to be performed on an account of a user at a management terminal, control the account management operation according to user location information and operation location information, where the user location information is used to indicate a location of the user, and the operation location information is used to indicate a location of the management terminal; a user location information database, configured to acquire the user location information and provide the user location information for the control center; and an operation location information database, configured to acquire the operation location information and provide the operation location information for the control center.

Through the method, the apparatus and the system for controlling the account management operation according to the embodiments of the present invention, when a management operation is performed on an account, a location of a user of the account is compared with a location of performing the management operation on the account, so that whether a person who performs the management operation on the account is the user holding the account can be determined, thereby preventing financial fraud in advance.

### BRIEF DESCRIPTION OF THE DRAWINGS

To describe the technical solutions in the embodiments of the present invention more clearly, accompanying drawings required for describing the embodiments or the prior art are briefly introduced below. Apparently, the accompanying drawings in the following description are merely some embodiments of the present invention, and persons of ordinary skill in the art may further obtain other drawings according to the accompanying drawings without making creative efforts.
FIG. 1 is a schematic flow chart of a method for controlling an account management operation according to an embodiment of the present invention;
FIG. 2 is another schematic flow chart of a method for controlling an account management operation according to an embodiment of the present invention;
FIG. 3 is a schematic block diagram of an apparatus for controlling an account management operation according to an embodiment of the present invention;
FIG. 4a is a schematic structural diagram of a system for controlling an account management operation according to an embodiment of the present invention; and
FIG. 4b is a schematic structural diagram of a system for controlling an account management operation according to another embodiment of the present invention.

### DETAILED DESCRIPTION OF THE EMBODIMENTS

The technical solutions of the embodiments of the present invention are elaborated below with reference to accompanying drawings. Evidently, the embodiments described below are only some rather than all embodiments of the present invention. All other embodiments obtained by persons of ordinary skill in the art based on the embodiments of the present invention without creative efforts shall fall within the protection scope of the present invention.

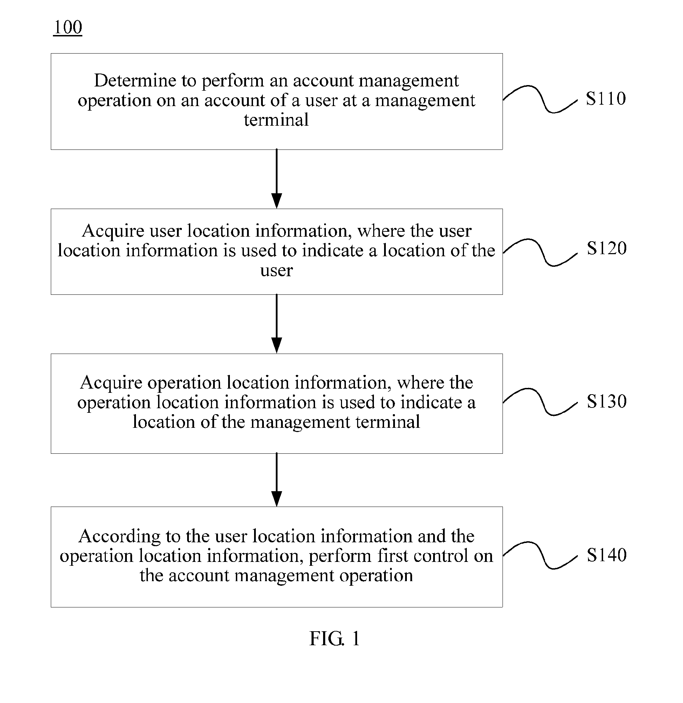

FIG. 1 shows an implementation subject of a method for controlling an account management operation in an embodiment of the present invention, and is a schematic flow chart of a method 100 for controlling an account management operation implemented by an apparatus or a system for controlling the account management operation. As shown in FIG. 1, the method 100 includes the following steps.

S110: Determine to perform an account management operation on an account of a user at a management terminal.

S120: Acquire user location information, where the user location information is used to indicate a location of the user.

S130: Acquire operation location information, where the operation location information is used to indicate a location of the management terminal.

S140: According to the user location information and the operation location information, perform first control on the account management operation.

In the embodiment of the present invention, as an example without limitation, the account may include a credit card, a bank card or a bank account issued by a financial institution such as a bank. As an example without limitation, the user is a holder of the account. As an example without limitation, the management terminal may include a POS machine, an online bank, an ATM or a charge agency terminal. As an example without limitation, the account management operation may include operations, such as depositing and withdrawing, paying, transferring and changing a password. It should be understood that, each entity or operation listed in the foregoing serve as an embodiment of the present invention, and the present invention is not limited thereto.

In S110, in the embodiment of the present invention, the implementation subject of the method for controlling the account management operation, that is, an apparatus or a system for controlling the account management operation, may determine to perform, at the management terminal, the account management operation on the account held by the user. For example, as an example without limitation, when the user inserts a credit card into an ATM, information indicating an account management operation is acquired from the ATM. The process may be the same as that in the prior art, which is not described herein.

In addition, optionally, in the embodiment of the present invention, it may be further determined whether it is required to execute a subsequent procedure according to subscription information of the user. For example, if the user enables a service corresponding to the method for controlling the account management operation in the embodiment of the present invention when handling an account, the subsequent procedure of the method can be executed.

In S120, the user location information for indicating the location of the user may be acquired. Optionally, in the embodiment of the present invention, the acquiring the user location information includes:
acquiring the user location information according to a mobile communication device used by the user.

Specifically, when the user handles an account, user device information (for example, a mobile phone number of a mobile phone, a physical address of the mobile phone and the like) of a mobile communication device (for example, a mobile phone) used by the user may be acquired, so as to acquire a location of the mobile communication device according to the user device information, thereby determining that the location of the mobile communication device is the location of the user. In the embodiment of the present invention, the mobile communication device may be positioned through an ordinary method for positioning the mobile communication device, such as a base station positioning method, a global position system (GPS, Global Position System) positioning method, so as to acquire the location of the mobile communication device. It should be understood that, each entity serving as the mobile communication device and the information for indicating the entity listed above merely serve as an embodiment of the present invention, and the present invention is not limited thereto. For example, the mobile communication device may communicate with one or more core networks through a radio access network (RAN, Radio Access Network). The mobile communication terminal may be a mobile phone (or referred to as a cell phone) or a computer having a mobile terminal, for example, a portable mobile device, a pocket mobile device, a handheld mobile device, a mobile device with a built-in computer, or a vehicle-mounted mobile device, which exchanges data with the radio access network.

In addition, optionally, the acquiring the user location information includes:
acquiring the user location information from an operator providing a communication service for the mobile communication device or an operator providing a positioning service for the mobile communication device.

Specifically, if the operator providing the communication service for the mobile communication device can provide the positioning service (for example, positioning is performed through a base station positioning method) for the mobile communication device, device information (for example, a mobile phone number) of the mobile communication device may be sent to the operator, so that the operator determines and positions the mobile communication device through the device information (for example, the mobile phone number), so as to send the user location information, which indicates the location of the user, to the implementation subject of the method for controlling the account management operation provided by the embodiment of the present invention, that is, to the apparatus or system for controlling the account management operation.

If the operator providing the positioning service for the mobile communication device can provide the positioning service (for example, positioning is performed through a GPS positioning method) for the mobile communication device, device information (for example, a mobile phone number) of the mobile communication device may be sent to the operator, so that the operator determines and positions the mobile communication device through the device information (for example, the mobile phone number), so as to send the user location information, which indicates the location of the user, to the implementation subject of the method for controlling the account management operation provided by the embodiment of the present invention, that is, to the apparatus or system for controlling the account management operation.

The user location information is acquired from a third party system (for example, an operator providing a communication service for the mobile communication device or an operator providing a positioning service for the mobile communication device), which can shorten the time for positioning the user and improve user experience.

In addition, optionally, the acquiring the user location information includes:
acquiring the user location information according to a positioning message that is sent by the mobile communication device through a signaling channel and includes the user location information.

Specifically, according to the device information (for example, a mobile phone number) of the mobile communication device, the mobile communication device is directly requested to report (for example, in a voice call manner or a short message manner) the location, so that the user reports a location where the user is currently located. Especially, if the mobile communication device is in a roaming state, since a data roaming fee is expensive, the user may actively send the user location information through a short message signaling channel in a short message manner to the implementation subject of the method for controlling the account management operation provided by the embodiment of the present invention, that is, to the apparatus or system for controlling the account management operation; or the user may actively send the user location information through a short message signaling channel in a short message manner to a third part system (for example, Unionpay or a short massage gateway of a bank), and then the apparatus or system for controlling the account management operation extracts the user location information from the third party system.

In addition, optionally, the acquiring the user location information includes:
acquiring the user location information through a positioning terminal device that is configured for the user and is used for positioning.

Specifically, a terminal device (for example, client software of the apparatus or system for controlling the account management operation in the embodiment of the present invention may be installed in a user intelligent terminal or a user mobile communication terminal (for example, a smart phone, a personal digital assistant (PDA, Personal Digital Assistant), or a PAD tablet computer)) uniquely indicating the user may be allocated to the user. The terminal device may acquire the user location information in real time through a mobile network (for example, through a base station positioning method) or a GPS service (for example, a GPS positioning method) of a satellite network, and send the user location information to the apparatus or system for controlling the account management operation.

In the embodiment of the present invention, the user location information may be in any one of the following formats:
① XXXX (year) XX (month) XX (day) XX (time) YY (country code) YY (city code) YY (district or road);
② XXXX (year) XX (month) XX (day) XX (time) YY (country code) YY (city code);
③ XXXX (year) XX (month) XX (day) XX (time) YY (country code);
④ YY (country code) YY (city code) YY (district or road);
⑤ YY (country code) YY (city code); and
⑥ YY (country code).

It should be understood that, the format of the user location information listed above merely serves as an embodiment of the present invention, the present invention is not limited thereto, and other formats or parameters capable of indicating the user location information all fall within the protection scope of the present invention.

In S130, the operation location information indicating a location of performing the account management operation may be acquired. For example, information for indicating the location (that is, the location of performing the account management operation) of the management terminal may be extracted from systems such as a POS terminal, an ATM terminal, a telecommunication operator network or a bank branch network address base of a financial institution such as a bank.

In the embodiment of the present invention, the operation location information may be in any one of the following formats:
① XXXX (year) XX (month) XX (day) XX (time) YY (country code) YY (city code) YY (district or road);
② XXXX (year) XX (month) XX (day) XX (time) YY (country code) YY (city code);
③ XXXX (year) XX (month) XX (day) XX (time) YY (country code);
④ YY (country code) YY (city code) YY (district or road);
⑤ YY (country code) YY (city code); and
⑥ YY (country code).

It should be understood that, the format of the operation location information listed above merely serves as an embodiment of the present invention, the present invention is not limited thereto, and other information formats or parameters capable of indicating the location of the management terminal all fall within the protection scope of the present invention. Moreover, the format of the operation location information may be the same as the format of the user location information.

In S140, the account management operation may be controlled according to the user location information and the operation location information.

In the embodiment of the present invention, the performing the first control on the account management operation according to the user location information and the operation location information includes:
if the location of the user is consistent with the location of the management terminal,
allowing the account management operation;
if the location of the user is inconsistent with the location of the management terminal, performing second control on the account management operation.

Specifically, if the current location (for example, specifically, a country, a city, a district, or a longitude and latitude according to a requirement of the user) of the user indicated by the user location information is the same as the location (for example, specifically, a country, a city, a district, or a longitude and latitude according to the demands of the user) of the management terminal performing an operation on the account of the user that is indicated by the operation location information (for example, the current location of the user and the operation location are both in Beijing), it may be determined that no fraud suspicion exists in the transaction, thereby allowing the account management operation.

If the current location of the user indicated by the user location information is different (for example, the current location of the user is in Beijing, while the operation location is in New York) from the location of the management terminal performing an operation on the account of the user that is indicated by the operation location information, it may be determined that fraud suspicion exists in the transaction, thereby blocking the account management operation or continuing to control the account management operation according to a location matching rule determined when the user handles a service corresponding to the method for controlling the account management operation. The base station positioning method, the GPS positioning method and other positioning methods all have certain positioning precision, and the precision may be accurate down to a distance unit, such as kilometer or meter. In addition, the precision obtained by using different positioning methods may vary. Moreover, when the management terminal is also a mobile terminal (for example, connected to a financial service institution such as a bank through a wireless network such as a general packet radio service (GPRS, General Packet Radio Service), wireless fidelity (WiFi, Wireless Fidelity), or a wideband code division multiple access (WCDMA, Wideband Code Division Multiple Access) mobile communication system ), and the financial institution such as the bank performs the account management operation on the account of the user through the mobile management terminal, the operation location information determined may indicate the location of the financial institution such as the bank. That is, in such a case, the current location of the user indicated by the user location information is inconsistent with the location of the management terminal performing an operation on the account of the user that is indicated by the operation location information. Therefore, in the embodiment of the present invention, when the location of the user is inconsistent with the location of the management terminal, a certain difference is allowed to exist between the location of the user and the location of the management terminal in a specific range according to location matching information (for example, including an area level, a distance threshold and the like, which are described in detail in the following) selected when the user enables a service corresponding to the method for controlling the account management operation. Optionally, in the embodiment of the present invention, if the location of the user is inconsistent with the location of the management terminal, the method further includes:
determining an area level according to user information of the user; and
determining, according to the area level, a first area including the location of the user and a second area including the location of the management terminal, where the level of the first area and the second area is the same as the area level.

Then, the performing the second control on the account management operation includes:
if the first area is consistent with the second area, allowing the account management operation; and
if the first area is inconsistent with the second area, blocking the account management operation.

Specifically, when the user enables a service corresponding to the method for controlling the account management operation, the user may select a level (for example, a city) of the location of the user and the location of the management terminal, where the level is used during the control on the account management operation; and based on correspondence between the user information of the user and the area level, save information indicating the area level corresponding to the user. Therefore, during the control on the account management operation, if the area (for example, a city) where the location of the user is located is the same as the area (for example, a city) where the location of the management terminal is located, the account management operation is allowed.

In addition, if the area (for example, a city) where the location of the user is located is inconsistent with the area (for example, a city) where the location of the management terminal is located, the account management operation is blocked.

It should be understood that, an embodiment in which the city serves as an area level is taken as an example above, but the present invention is not limited thereto. For example, an administrative area, such as a country, may be used as an area level, and an economic area determined by the financial institution, such as the bank, may also be used as an area level.

In this way, a personalized service can be provided for the user, thereby improving user experience and avoiding a misoperation.

Optionally, in the embodiment of the present invention, if the location of the user is inconsistent with the location of the management terminal, the method further includes:
determining a distance threshold according to user information of the user; and
determining a distance from the location of the user to the location of the management terminal.

Then, the performing the second control on the account management operation includes:
if the distance from the location of the user to the location of the management terminal is less than or equal to the distance threshold, allowing the account management operation; and
if the distance from the location of the user to the location of the management terminal is greater than the distance threshold, blocking the account management operation.

Specifically, when the user enables a service corresponding to the method for controlling the account management operation, the user may select a distance threshold (for example, 1 kilometer) which is used for indicating whether the distance from the location of the user to the location of the management terminal falls within an allowed range and which is used during the control on the account management operation, and based on correspondence between the user information of the user and the area level, save information indicating the distance threshold corresponding to the user. Therefore, during the control on the account management operation, if the distance from the location of the user to the location of the management terminal is less than or equal to the distance threshold, the account management operation is allowed.

In addition, if the distance from the location of the user to the location of the management terminal is greater than the distance threshold, the account management operation is blocked.

It should be understood that, the specific numeric value serving as the distance threshold listed above is merely an embodiment of the present invention, and the present invention is not limited thereto.

In this way, a personalized service can be provided for the user, thereby improving user experience and avoiding a misoperation.

Optionally, in the embodiment of the present invention, if the location of the user is inconsistent with the location of the management terminal, the method further includes:
performing an authentication operation on the user, so as to acquire authentication information used for indicating whether the user allows the account management operation, where the performing the second control on the account management operation includes:
   if the user allows the account management operation, allowing the account management operation; and
   if the user does not allow the account management operation, blocking the account management operation.

Specifically, after a fraud suspicion operation (that is, the location of the user is inconsistent with the location of the management terminal or the location matching rule is not met) is identified, the authentication operation may be performed on the user. For example, legitimacy of the operation can be verified in real time by timely dialing the phone number registered by the user, and if the user confirms that the operation is legal, the operation is allowed; otherwise, the operation is refused. In addition, after the phone number of the user is dialed, the legitimacy of the operation can also be verified by asking the user to press corresponding numeric keys, and if the verification succeeds, the operation is allowed; otherwise, the operation is refused. It should be understood that, the manner of implementing the authentication operation on the user listed above is merely for exemplary illustration of the present invention, the present invention is not limited thereto, and other authentication manners capable of determining the legitimacy of the operation by querying the user all fall within the protection scope of the present invention.

In this way, the user experience can be improved, and the misoperation can be avoided. Moreover, in the case that, for example, a person authorized by the user performs a management operation on the account of the user, the case can also be well dealt with.

Optionally, in the embodiment of the present invention, the performing the second control on the account management operation includes:
blocking the account management operation.

Specifically, if the location of the user is inconsistent with the location of the management terminal, the operation can be directly refused.

Optionally, in the embodiment of the present invention, after the blocking the account management operation, the method further includes:
storing at least one piece of operating time of the account management operation, the operation location information, operation content of the account management operation,
and the user information of the user in a fraud suspicion database, where the fraud suspicion database is used to store at least one piece of the time, the place, and the operation content of the account management operation having fraud suspicion, and the user information of a defrauded user.

In addition, the performing the first control on the account management operation according to the user location information and the operation location information includes:
according to the user location information, the operation location information, and the fraud suspicion database, performing the first control on the account management operation, where the fraud suspicion database stores at least one piece of the time, the place, and the operation content of the account management operation having the fraud suspicion, and the user information of the defrauded user.

Specifically, after a fraud suspicion operation (that is, the location of the user is inconsistent with the location of the management terminal, the location matching rule is not met, or authentication of the user fails) is identified, all process information confirmed with the user, such as the time, the place and the operation content of the account management operation, the user information of the defrauded user, and the like are synchronously recorded in the fraud suspicion database, to be used for further data mining and analysis. The fraud suspicion database may be a subject-oriented, integrated, time-related and unchangeable data set. Data in the fraud suspicion database may be organized according to subjects such as a fraud type, a defrauded user group, fraud time, and a fraud place, and can be used to analyze the characteristic of a fraud and offer suggestions to the control on the account management operation.

For example, by analyzing the data in the fraud suspicion database, an easily defrauded user group, the location of the management terminal where the fraud easily occurs, the time when the fraud easily occurs, the operation content in which the fraud easily occurs, and the like may be determined. Specifically, if a user of a target account belongs to the easily defrauded user group, alarm information may be sent to the user, so that the user is on the alert. If a fraud suspicion event (the management terminal is probably refitted by a lawbreaker) once occurred in the management terminal performing the management operation on the target account, alarm information may be sent to the user, so that the user is on the alert. If operation content performed on the target account belongs to the operation content (for example, a remittance operation) in which the fraud easily occurs, alarm information may be sent to the user, so that the user is on the alert.

According to the method for controlling the account management operation provided by the embodiment of the present invention, when a management operation is performed on an account, a location of a user of the account is compared with a location of performing the management operation on the account, so that whether a person who performs the management operation on the account is the user holding the account can be determined, thereby preventing financial fraud in advance.

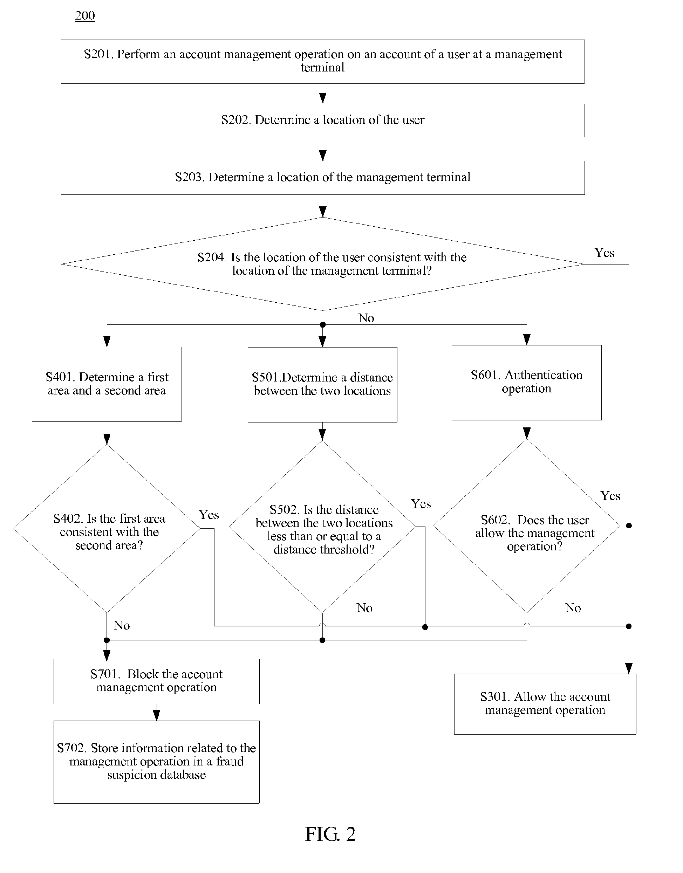

FIG. 2 illustrates a specific flow of a method 200 for controlling an account management operation provided by an embodiment of the present invention.

S201: Determine to perform an account management operation on an account of a user at a management terminal, as shown in FIG. 2.

S202: Determine a location of the user.

S203: Determine a location of the management terminal.

S204: Judge whether the location of the user is consistent with the location of the management terminal, if yes, perform S301; and if no, perform any one of steps S401, S501, S601, and S701. S301: Allow the account management operation.

Optionally, S401: according to an area level selected when the user enables a service, determine a first area including the location of the user and a second area including the location of the management terminal.

S402: Judge whether the first area is consistent with the second area, if yes, perform S301; and if no, perform any one of steps S501, S601, and S701.

Optionally, S501: determine a distance from the location of the user to the location of the management terminal.

S502: Determine whether the distance from the location of the user to the location of the management terminal is less than or equal to a distance threshold selected when the user enables a service; if the distance from the location of the user to the location of the management terminal is less than or equal to the distance threshold, perform S301; if the distance from the location of the user to the location of the management terminal is greater than the distance threshold, perform any one of steps S401, S601, and S701.

Optionally, S601: perform an authentication operation on the user, and acquire authentication information used for indicating whether the user allows the account management operation.

S602: Determine whether the user allows the management operation; if the user allows the account management operation, perform S301; and if the user does not allow the account management operation, perform S701.

S701: Block the account management operation.

Optionally, S702: store the operating time of the account management operation, the operation location information, operation content of the account management operation, and user information of the user in a fraud suspicion database, for the user or other fraud management institutions to use. In the foregoing processing procedures, S401 and S402 are first performed, then S501 and S502 are performed, and then S601 and S602 are performed, but the present invention is not limited thereto. Alternatively, S501 and S502 may be first performed, and then S601 and S602 are performed. Alternatively, S401 and S402 may be first performed, and then S601 and S602 are performed. Alternatively, S601 and S602 may be directly performed. S401, S402, S501, S502, S601 and S602 may be omitted, and S701 is directly performed.

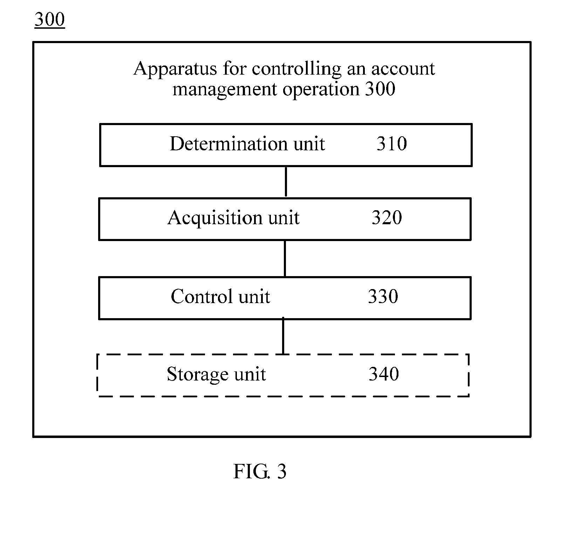

In the foregoing, with reference to FIG. 1 and FIG. 2, the method for controlling the account management operation according to the embodiment of the present invention is described in detail. In the following, with reference to FIG. 3, an apparatus for controlling an account management operation according to an embodiment of the present invention is described in detail.

FIG. 3 is a schematic block diagram of an apparatus 300 for controlling an account management operation according to an embodiment of the present invention. As shown in FIG. 3, the apparatus 300 includes:
a determination unit 310, configured to determine to perform an account management operation on an account of a user at a management terminal;
an acquisition unit 320, configured to: acquire user location information, where the user location information is used to indicate a location of the user, and
acquire operation location information, where the operation location information is used to indicate a location of the management terminal; and
a control unit 330, configured to perform first control on the account management operation according to the user location information and the operation location information.

In addition, in the embodiment of the present invention, the control unit 330 is specifically configured to: if the location of the user is consistent with the location of the management terminal, allow the account management operation;
if the location of the user is inconsistent with the location of the management terminal,
perform second control on the account management operation.

A base station positioning method, a GPS positioning method and other positioning methods all have certain positioning precision, and the precision may be accurate down to a distance unit, such as kilometer or meter. In addition, the precision obtained by using different positioning methods may vary. Moreover, when the management terminal is also a mobile terminal (for example, connected to a financial service institution such as a bank through a wireless network such as a general packet radio service (GPRS, General Packet Radio Service)), and the financial institution such as the bank performs the account management operation on the account of the user through a mobile management terminal, the operation location information determined may indicate the location of the financial institution such as the bank. That is, in such a case, the current location of the user indicated by the user location information is inconsistent with the location of the management terminal performing an operation on the account of the user that is indicated by the operation location information. Therefore, in the embodiment of the present invention, when the location of the user is inconsistent with the location of the management terminal, a certain difference is allowed to exist between the location of the user and the location of the management terminal in a specific range according to location matching information (for example, including an area level, a distance threshold and the like, which are described in detail in the following) selected when the user enables a service corresponding to the method for controlling the account management operation.

Optionally, in the embodiment of the present invention, the acquisition unit 320 is further configured to determine an area level according to user information of the user; and determine, according to the area level, a first area including the location of the user and a second area including the location of the management terminal, where the level of the first area and the second area is the same as the area level.

The control unit 330 is specifically configured to: if the first area is consistent with the second area, allow the account management operation;
if the first area is inconsistent with the second area, block the account management operation.

In this way, a personalized service can be provided for the user, thereby improving user experience and avoiding a misoperation.

Optionally, in the embodiment of the present invention, the acquisition unit 320 is further configured to determine a distance threshold according to the user information of the user; and
determine a distance from the location of the user to the location of the management terminal.

The control unit 330 is specifically configured to: if the distance from the location of the user to the location of the management terminal is less than or equal to the distance threshold, allow the account management operation;
if the distance from the location of the user to the location of the management terminal is greater than the distance threshold, block the account management operation.

In this way, a personalized service can be provided for the user, thereby improving user experience and avoiding a misoperation.

Optionally, in the embodiment of the present invention, the acquisition unit 320 is further configured to perform an authentication operation on the user, to acquire authentication information used for indicating whether the user allows the account management operation.

The control unit 330 is specifically configured to: if the user allows the account management operation, allow the account management operation;
if the user does not allow the account management operation, block the account management operation.

In this way, the user experience can be improved, and the misoperation can be avoided. Moreover, in the case that, for example, a person authorized by the user performs a management operation on the account of the user, the case can also be well dealt with.

Optionally, in the embodiment of the present invention, the control unit 330 is specifically configured to: if the location of the user is inconsistent with the location of the management terminal, block the account management operation.

Optionally, in the embodiment of the present invention, the apparatus further includes:
a storage unit 240, configured to store at least one piece of operating time of the account management operation, the operation location information, operation content of the account management operation, and the user information of the user in a fraud suspicion database, where the fraud suspicion database is used to store at least one piece of the time, the place, and the operation content of the account management operation having fraud suspicion, and the user information of a defrauded user.

Optionally, in the embodiment of the present invention, the control unit 330 is specifically configured to perform first control on the account management operation according to the user location information, the operation location information, and the fraud suspicion database, where the fraud suspicion database stores at least one piece of the time, the place, and the operation content of the account management operation having the fraud suspicion and the user information of the defrauded user.

Optionally, in the embodiment of the present invention, the acquisition unit 320 is specifically configured to acquire the user location information according to a mobile communication device used by the user.

Optionally, in the embodiment of the present invention, the acquisition unit 320 is specifically configured to acquire the user location information from an operator providing a communication service for the mobile communication device or an operator providing a positioning service for the mobile communication device.

Optionally, in the embodiment of the present invention, the acquisition unit 320 is specifically configure to acquire the user location information according to a positioning message that is sent by the mobile communication device through a signaling channel and includes the user location information.

The user location information is acquired from a third party system (for example, an operator providing a communication service for the mobile communication device or an operator providing a positioning service for the mobile communication device), which can shorten the time for positioning the user and improve user experience.

Optionally, in the embodiment of the present invention, the acquisition unit 320 is specifically configured to acquire the user location information according to a positioning terminal device which is configured for the user and is used for positioning.

The apparatus 300 for controlling the account management operation according to the embodiment of the present invention is an implementation subject of the method in the embodiment of the present invention, and units and modules of the apparatus 300 for controlling the account management operation and the foregoing other operations and/or functions each are used to implement the corresponding procedures in the method 100 shown in FIG. 1. Details are not repeated herein for the sake of brevity.

Through the apparatus for controlling the account management operation according to the embodiment of the present invention, when a management operation is performed on an account, a location of a user of the account is compared with a location of performing the management operation on the account, so that whether a person who performs the management operation on the account is the user holding the account can be determined, thereby preventing financial fraud in advance.

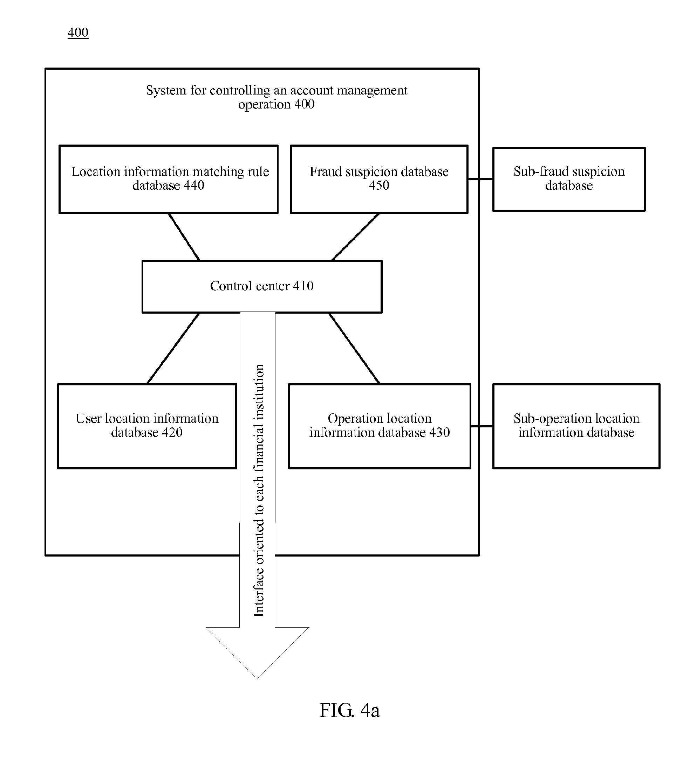

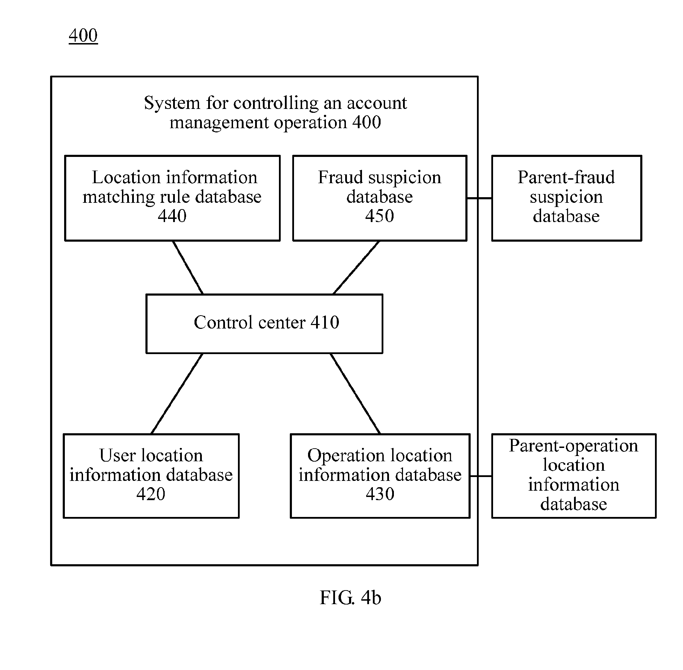

In the foregoing description, with reference to FIG. 1 and FIG. 2, the method for controlling the account management operation according to the embodiment of the present invention is described in detail, and with reference to FIG. 3, the apparatus for controlling the account management operation according to the embodiment of the present invention is described in detail. In the following, with reference to FIG. 4a and FIG. 4b, a system for controlling an account management operation according to an embodiment of the present invention is described in detail.

FIG. 4a and FIG. 4b are schematic block diagrams of a system 400 for controlling an account management operation according to an embodiment of the present invention. As shown in FIG. 4a and FIG. 4b, the system 400 includes:
a control center 410, configured to: when it is determined that an account management operation needs to be performed on an account of a user at a management terminal, control the account management operation according to user location information and operation location information, where the user location information is used to indicate a location of the user, and the operation location information is used to indicate a location of the management terminal;
a user location information database 420, configured to acquire the user location information and provide the user location information for the control center; and an operation location information database 430, configured to acquire the operation location information and provide the operation location information for the control center.

Optionally, in the embodiment of the present invention, the control center 410 is further configured to control the account management operation according to a location information matching rule, where the location information matching rule includes at least one piece of information of area level information, distance threshold information and authentication information, the area level information is used to indicate a level of a first area including the location of the user and a level of a second area including the location of the management terminal, the distance threshold information is used to indicate, in the case that the account management operation is allowed, a maximum distance from the location of the user to the location of the management terminal, and the authentication information is used to indicate whether the user allows the account management operation.
the system further comprises:
a location information matching rule database 440, configured to acquire the location information matching rule according to user information of the user and provide the location information matching rule for the control center.

Optionally, in the embodiment of the present invention, the control center 410 is further configured to: according to the user location information, the operation location information, and fraud suspicion information, control the account management operation, where the fraud suspicion information includes at least one piece of the time, the place, and the operation content of the account management operation having fraud suspicion, and the user information of the defrauded user.
the system further comprises:
a fraud suspicion database 450, configured to acquire the fraud suspicion information
and provide the fraud suspicion information for the control center.

Optionally, in the embodiment of the present invention, the user location information database 420 is configured to acquire the user location information according to a positioning message that is sent by the user and includes the location information.

Optionally, as shown in FIG. 4a, in the embodiment of the present invention, the system for controlling the account management operation is deployed in a centralized manner with respect to each financial institution, and the financial institution can perform the account management operation; and
the control center has an interface oriented to each financial institution.

Moreover, in such a case, a sub-operation location information database is deployed in each financial institution, where the sub-operation location information database is connected to the operation location information database 430 and is configured to acquire the operation location information and provide the operation location information for the control center through the operation location information database.

In addition, in such a case,
a sub-fraud suspicion database is deployed in each financial institution, where the sub-fraud suspicion database is connected to the fraud suspicion database 450 and is configured to acquire the fraud suspicion information and provide the fraud suspicion information for the control center through the fraud suspicion database.

Specifically, the system of the present invention may be independently deployed in each financial institution such as a bank, as a characteristic service of the bank to serve the user of the bank, where corresponding operation location information may be synchronized between the operation location information database and an operation location information database that is deployed in a centralized manner in an institution such as State Unionpay, so as to improve and update the operation location information. In addition, corresponding information may also be synchronously updated in the fraud suspicion database and a fraud suspicion database that is deployed in a centralized manner in an institution such as State Unionpay, so as to ensure information comprehensiveness, thereby ensuring accuracy of prevention.

Optionally, as shown in FIG. 4b, in the embodiment of the present invention, the system for controlling the account management operation is deployed in each financial institution, and the system can perform the account management operation.

Moreover, in such a case, a parent-operation location information database is deployed in a centralized manner with respect to each financial institution, where the parent-operation location information database is connected to the operation location information database 430 and is configured to acquire the operation location information and provide the operation location information for the control center 410 through the operation location information database.

In addition, in such a case, the control center is further configured to: according to the user location information, the operation location information, and the fraud suspicion information, control the account management operation, where the fraud suspicion information includes at least one piece of the time, the place, and the operation content of the account management operation having fraud suspicion, and user information of a defrauded user.
the system further comprises:
a fraud suspicion database 450, configured to acquire the fraud suspicion information and provide the fraud suspicion information for the control center.

A parent-fraud suspicion database is deployed in a centralized manner with respect to each financial institution, where the parent-fraud suspicion database is connected to the fraud suspicion database and is configured to acquire the fraud suspicion information and provide the fraud suspicion information for the control center through the fraud suspicion database.

Specifically, the system of the present invention may be deployed in a centralized manner in a third party institution, such as China Unionpay, VISA, MASTER, or other third-party service providers. After the centralized deployment, an interface is open to each financial institution such as a bank, so as to provide a financial fraud prevention service for each bank and user. For the centralized deployment, data needs to be synchronously updated in the operation location information databases and the fraud suspicion databases dispersedly deployed, and moreover, an interface needs to be open to each financial institution using a financial fraud prevention analysis service or a fraud suspicion service, so that the institution or user can use the service. The centralized deployment manner may be in cooperation with the dispersed deployment manner, so as to put an end to financial fraud events of all kinds in a wider range.

The system 400 for controlling the account management operation according to the embodiment of the present invention is an implementation subject of the method in the embodiment of the present invention, and units and modules of the system 400 for controlling the account management operation and the foregoing other operations and/or functions each are used to implement the corresponding procedures in the method 100 shown in FIG. 1. Details are not repeated herein for the sake of brevity.

According to the system for controlling the account management operation in the embodiment of the present invention, when a management operation is performed on an account, a location of a user of the account is compared with a location of performing the management operation on the account, so that whether a person who performs the management operation on the account is the user holding the account can be determined, thereby preventing financial fraud in advance.

It should be understood that, in each embodiment of the present invention, the serial numbers of the steps do not imply an execution sequence, and the execution sequence of the steps should be determined according to their functions and internal logic, but not intended to limit the implementation of the embodiment of the present invention.

Persons of ordinary skill in the art may be aware that each exemplary unit and algorithm step described in the embodiments disclosed herein can be implemented by electronic hardware, or a combination of computer software and electronic hardware. Whether these functions are performed using hardware or software depends on the particular application and design constraint of the technical solutions. A person skilled in the art may use different methods to implement the described functions for each specific application. However, such implementation should not be considered as beyond the scope of the present invention.

It can be clearly understood by persons skilled in the art that, for the purpose of convenient and brief description, for a detailed working process of the foregoing system, apparatus and unit, reference may be made to the corresponding process in the method embodiments, and the details will not be described herein again.

In the embodiments provided in the present application, it should be understood that the disclosed system, apparatus, and method may be implemented in other manners. For example, the described apparatus embodiments are merely exemplary. For example, the unit division is merely logical function division and can be other division in actual implementation. For example, multiple units or components can be combined or integrated into another system, or some features can be ignored or not performed. In addition, the displayed or discussed mutual couplings or direct couplings or communication connections may be implemented through some interfaces. The indirect couplings or communication connections between the apparatuses or units may be implemented in electronic, mechanical or other forms.

The units described as separate parts may or may not be physically separate, and parts displayed as units may or may not be physical units, that is, may be located in one location or may be distributed on multiple network elements. A part or all of the units may be selected according to actual requirements to achieve the objectives of the solutions of the embodiments.

In addition, function units in each embodiment of the present invention may be integrated into a processing unit, or each of the units may exist alone physically, or two or more units are integrated into a unit.

When being implemented in the form of a software function unit and sold or used as a stand-alone product, the functions may be stored in a computer-readable storage medium. Based on such understanding, the essence of the technical solutions of the present invention, or part that makes contributions to the prior art, or part of the technical solutions may be embodied in the form of a software product. The computer software product may be stored in a storage medium, and incorporates several instructions for instructing a computer apparatus (for example, personal computer, server, or network apparatus) to execute all or part of the steps of the method in each embodiment of the present invention. The storage medium includes: any medium that can store program code, such as a U-disk, a removable hard disk, a read-only memory (ROM, Read-Only Memory), a random access memory (RAM, Random Access Memory), a magnetic disk, or a CD-ROM.

The foregoing description is merely exemplary embodiments of the present invention, but not intended to limit the protection scope of the present invention. Any variation or replacement easily derived by persons skilled in the art within the technical scope disclosed by the present invention should fall within the protection scope of the present invention. Therefore, the protection scope of the present invention is subject to the protection scope of the claims.

## Claims

1. A method for controlling an account management operation, comprising:
determining to perform an account management operation on an account of a user at a management terminal;
acquiring user location information, wherein the user location information is used to indicate a location of the user;
acquiring operation location information, wherein the operation location information is used to indicate a location of the management terminal; and
if the location of the user is consistent with the location of the management terminal, allowing the account management operation;
if the location of the user is inconsistent with the location of the management terminal, performing second control on the account management operation.

2. The method according to claim 1, wherein if the location of the user is inconsistent with the location of the management terminal, the method further comprises:
determining an area level according to user information of the user; and
determining, according to the area level, a first area comprising the location of the user and a second area comprising the location of the management terminal, wherein level of the first area and level of the second area are the same as the area level,
wherein the performing the second control on the account management operation comprises:
if the first area is consistent with the second area, allowing the account management operation;
if the first area is inconsistent with the second area, blocking the account management operation.

3. The method according to claim 1, wherein if the location of the user is inconsistent with the location of the management terminal, the method further comprises:
determining a distance threshold according to the user information of the user; and
determining a distance from the location of the user to the location of the management terminal, wherein the performing the second control on the account management operation comprises:
if the distance from the location of the user to the location of the management terminal is less than or equal to the distance threshold, allowing the account management operation;
if the distance from the location of the user to the location of the management terminal is greater than the distance threshold, blocking the account management operation.

4. The method according to claim 1, wherein if the location of the user is inconsistent with the location of the management terminal, the method further comprises:
performing an authentication operation on the user, to acquire authentication information for indicating whether the user allows the account management operation,
wherein the performing the second control on the account management operation comprises:
if the user allows the account management operation, allowing the account management operation;
if the user does not allow the account management operation, blocking the account management operation.

5. The method according to claim 1, wherein the performing the second control on the account management operation comprises:
blocking the account management operation.

6. The method according to any one of claims 2 to 5, wherein after the blocking the account management operation, the method further comprises:
storing at least one piece of operating time information of the account management operation, the operation location information of the account management operation, operation content of the account management operation, and the user information of the user in a fraud suspicion database, wherein the fraud suspicion database is used to store at least one piece of time, a place, and operation content of an account management operation having fraud suspicion, and user information of a defrauded user.

7. The method according to claim 1, wherein the acquiring the user location information comprises:
acquiring the user location information from an operator providing a communication service for a mobile communication device used by the user or an operator providing a positioning service for a mobile communication device used by the user; or
acquiring the user location information according to a positioning message that is sent by a mobile communication device used by the user through a signaling channel and comprises the user location information; or
acquiring the user location information through a positioning terminal device that is configured for the user and is used for positioning.

8. An apparatus for controlling an account management operation, comprising:
a determination unit, configured to determine to perform an account management operation on an account of a user at a management terminal;
an acquisition unit, configured to acquire user location information, wherein the user location information is used to indicate a location of the user, and
acquire operation location information, wherein the operation location information is used to indicate a location of the management terminal; and
a control unit, configured to: if the location of the user is consistent with the location of the management terminal, allow the account management operation;
if the location of the user is inconsistent with the location of the management terminal, perform second control on the account management operation.

9. The apparatus according to claim 8, wherein the acquisition unit is further configured to determine an area level according to user information of the user, and
determine, according to the area level, a first area comprising the location of the user and a second area comprising the location of the management terminal, wherein level of the first area and level of the second area are the same as the area level; and
the control unit is specifically configured to: if the first area is consistent with the second area, allow the account management operation,
if the first area is inconsistent with the second area, block the account management operation.

10. The apparatus according to claim 8, wherein the acquisition unit is further configured to determine a distance threshold according to the user information of the user, and
determine a distance from the location of the user to the location of the management terminal; and
the control unit is specifically configured to: if the distance from the location of the user to the location of the management terminal is less than or equal to the distance threshold, allow the account management operation,
if the distance from the location of the user to the location of the management terminal is greater than the distance threshold, block the account management operation.

11. The apparatus according to claim 8, wherein the acquisition unit is further configured to perform an authentication operation on the user, to acquire authentication information used for indicating whether the user allows the account management operation; and
the control unit is specifically configured to: if the user allows the account management operation, allow the account management operation,
if the user does not allow the account management operation, block the account management operation.

12. The apparatus according to claim 8, wherein the control unit is specifically configured to:
if the location of the user is inconsistent with the location of the management terminal, block the account management operation.

13. The apparatus according to any one of claims 9 to 12, further comprising:
a storage unit, configured to store at least one piece of operating time information of the account management operation, the operation location information of the account management operation, operation content of the account management operation, and the user information of the user in a fraud suspicion database, wherein the fraud suspicion database is used to store at least one piece of time, a place, and operation content of an account management operation having fraud suspicion, and user information of a defrauded user.

14. The apparatus according to claim 8, wherein the acquisition unit is specifically configured to: acquire the user location information from an operator providing a communication service for a mobile communication device used by the user or an operator providing a positioning service for a mobile communication device used by the user; or
acquire the user location information according to a positioning message that is sent by a mobile communication device used by the user through a signaling channel and comprises the user location information; or
acquire the user location information through a positioning terminal device that is configured for the user and is used for positioning.

15. A system for controlling an account management operation, comprising:
a control center, configured to: if it is determined that an account management operation needs to be performed on an account of a user at a management terminal, control the account management operation according to user location information and operation location information, wherein the user location information is used to indicate a location of the user, and the operation location information is used to indicate a location of the management terminal;
a user location information database, configured to acquire the user location information and provide the user location information for the control center; and
an operation location information database, configured to acquire the operation location information and provide the operation location information for the control center.
